# EUROPÄISCHE PATENTSCHRIFT

(11) **EP 1 977 212 B1**
(45) Veröffentlichungstag und Bekanntmachung des Hinweises auf die Patenterteilung: **13.03.2013**
(21) Anmeldenummer: 07702661.5
(22) Anmeldetag: 10.01.2007
(51) Int. Cl.: G01M 17/08, G01M 17/10, B61F 9/00

(54) **VERFAHREN UND EINRICHTUNG ZUR ZUSTANDSÜBERWACHUNG VON RADSÄTZEN ODER DREHGESTELLEN EINES SCHIENENFAHRZEUGS**
METHOD AND DEVICE FOR MONITORING THE CONDITION OF WHEELSETS OR BOGIES OF A RAILWAY VEHICLE
PROCÉDÉ ET DISPOSITIF POUR SURVEILLER L'ÉTAT D'ESSIEUX OU DE BOGIES D'UN VÉHICULE FERROVIAIRE

(30) Priorität: 12.01.2006 DE 102006001540
(43) Veröffentlichungstag der Anmeldung: 08.10.2008
(73) Patentinhaber: KNORR-BREMSE Systeme für Schienenfahrzeuge GmbH, 80909 München (DE)
(72) Erfinder: RASEL, Thomas, 85635 Höhenkirchen-Siegertsbrunn (DE); AURICH, Stefan, 86316 Friedberg (DE)
(74) Vertreter: Schönmann, Kurt
(86) Internationale Anmeldenummer: PCT/EP2007/000159
(87) Internationale Veröffentlichungsnummer: WO 2007/082657

(56) Entgegenhaltungen:
- EP-A- 1 236 633
- EP-A1- 1 104 734
- WO-A-02/22424
- JP-A- 2002 211 400

## Beschreibung

### Stand der Technik

Die Erfindung geht aus von einem Verfahren und einer Einrichtung zur Zustandsüberwachung von Radsätzen oder Drehgestellen eines Schienenfahrzeugs, wobei die Räder der Radsätze oder Drehgestelle durch Achsen starr verbunden sind und ein konisches Radprofil aufweisen, gemäß den Oberbegriffen von Anspruch 1 und Anspruch 4.

Zu den größten Störungen im Schienenfahrzeugverkehr zählen Entgleisungen. Sie führen in der Regel zu Schäden am Schienenfahrzeug selbst als auch am Gleiskörper, welche umso größer sind, je länger eine Entgleisung beispielsweise eines einzelnen Radsatzes oder Drehgestells vom Triebwagenführer unentdeckt bleibt. Daher besteht eine große Nachfrage nach Verfahren und Einrichtung, mit welchen Entgleisungen von Radsätzen oder ganzen Drehgestellen zuverlässig und vor allem kostengünstig festgestellt werden können.

Die bisher unveröffentlichte DE 10 2005 040 504.5 beschreibt ein Verfahren und eine Vorrichtung zur Detektion von Störungen oder Fehlern in Fahrwerken von durch Luftfedereinrichtungen gefederten Schienenfahrzeugen, insbesondere zur Detektion von Entgleisungen. Hierzu wird wenigstens eine im Rahmen der Luftfederungseinrichtung oder einer Bremseinrichtung ohnehin erfasste und sich durch eine Störung oder einen Fehler im Fahrwerk ändernde physikalische Größe überwacht, beispielsweise der Druck in einem Luftfederbalg der Luftfederungseinrichtung. Diese Art der Detektion von Störungen ist jedoch auf Schienenfahrzeuge mit einer Luftfedereinrichtung beschränkt.

Der vorliegenden Erfindung liegt die Aufgabe zugrunde, ein Verfahren und eine Einrichtung der eingangs erwähnten Art derart weiter zu entwickeln, dass es universeller einsetzbar ist.

Diese Aufgabe wird erfindungsgemäß durch die Merkmale von Anspruch 1 gelöst.

### Vorteile der Erfindung

Der Sinuslauf ist eine Beschreibung des Laufverhaltens von Schienenfahrzeugradsätzen mit konischem Radprofil. Durch den Sinuslauf wird in der Geraden und auf Kurven mit großen Radien eine Selbstzentrierung des Radsatzes auf dem Fahrweg erzeugt, ohne dass es zum Anlaufen des Spurkranzes kommen muss. Dadurch wird ein besseres Laufverhalten und ein geringerer Verschleiß erreicht als bei Radsätzen mit zylindrischem Radprofil, die keinen Sinuslauf aufweisen.

Zum Sinuslauf kommt es dadurch, dass bei einem Radsatz mit konischem Radprofil, der außermittig steht, die Radradien an den beiden Berührungspunkten am Gleis unterschiedlich sind. Da die beiden Räder des Radsatzes über die Achse starr verbunden sind, bewegt sich das Rad mit dem größerem Radius am Berührpunkt schneller nach vorne, als das Rad mit dem kleineren Radius. Daher lenkt ein zu weit rechts stehender Radsatz nach links, weil der Radradius am rechten Berührpunkt größer ist als am linken Berührpunkt. Entsprechend lenkt ein zu weit links stehender Radsatz nach rechts. Hierdurch kommt es zu einer Längsbewegung des Radsatzes in Form einer Sinuskurve.

Die Erfindung basiert auf dem Gedanken, ein Ausbleiben des Sinuslaufs als Signal für das Vorliegen einer Entgleisung zu werten und ein entsprechendes Signal zu erzeugen, damit entweder automatisch oder durch den Treibwagenführer Gegenmaßnahmen eingeleitet werden können, welche beispielsweise in einem sofortigen Abbremsen des Schienenfahrzeugs oder Schienenfahrzeugverbandes bestehen können. Hintergrund der erfinderischen Überlegungen ist folglich, dass der Sinuslauf als typisches Merkmal der Rollbewegung von Schienenfahrzeugen bei einer Entgleisung ausbleibt, weil dann der entgleiste Radsatz oder das entgleiste Drehgestell aufgrund des Nichteingriffs mit den Schienen keine periodischen Schwingungen mehr ausführen kann, welche ja gerade auf dem Zusammenwirken von Rädern mit konischem Radprofil mit den Schienen beruhen.

Der besondere Vorteil dieser Maßnahmen ist darin zu sehen, dass keine zusätzlichen Informationen über den Verlauf des Gleisbetts benötigt werden, wie sie etwa bei einem Überwachungssystem notwendig sind, mit welchem vertikale Verzögerungen oder Bewegungen der Radsätze oder Drehgestelle als Indikator für Entgleisungen herangezogen werden. Denn ohne eine aufwendige Überwachung des Gleisbettverlaufs könnten bei einem solchen System bereits durch ein in Fahrtrichtung unebenes Gleisbett hervorgerufene vertikale Schwingungen des Radsatzes ein Auslösen des Entgleisungssignals hervorrufen, ohne dass tatsächlich eine Entgleisung stattgefunden hat.

Das erfindungsgemäße Verfahren ist folglich kostengünstig durch Sensormittel zur Überwachung des Sinuslaufs wenigstens eines Radsatzes oder Drehgestells, welcher auf dem konischen Radprofil der Räder basiert, sowie durch eine Auswerteeinrichtung zur Auswertung der Sensorsignale dieser Sensormittel, welche bei einem Ausbleiben des Sinuslaufs ein Signal für das Vorliegen einer Entgleisung des Radsatzes oder Drehgestells erzeugt.

Dieses Signal kann dem Triebwagenführer des Schienenfahrzeugverbands optisch und/oder akustisch dargestellt werden, beispielsweise in Form einer blinkenden Warnlampe oder durch einen Wamton, damit dieser Gegenmaßnahmen einleitet, beispielsweise in Form einer Notbremsung.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt wird die Frequenz des Sinuslaufs in Bezug zur jeweils vorliegenden Fahrzeuggeschwindigkeit oder Raddrehgeschwindigkeit gemessen und mit einem gespeicherten, für die vorliegende Fahrzeuggeschwindigkeit oder Raddrehgeschwindigkeit typischen Wert oder Wertebereich für diese Frequenz verglichen und bei Abweichung der gemessenen Frequenz von dem gespeicherten Wert oder Wertebereich um ein vorbestimmtes Maß das Signal für das Vorliegen einer Entgleisung des Radsatzes oder Drehgestells erzeugt. Diese Kennfelder mit den charakteristischen Frequenzen werden beispielsweise durch Versuche ermittelt.

Genaueres geht aus der folgenden Beschreibung eines Ausführungsbeispiels hervor.

### Zeichnungen

Nachstehend ist ein Ausführungsbeispiel der Erfindung in der Zeichnung dargestellt und in der nachfolgenden Beschreibung näher erläutert. In der Zeichnung zeigt
- Fig.1: eine perspektivische Darstellung eines Radsatzes eines Schienenfahrzeugs bei ungestörtem Lauf und in entgleistem Zustand;
- Fig.2: ein Diagramm, welches ein Signal für die Schwingungen des Radsatzes über der Zeit darstellt;
- Fig.3: eine schematische Darstellung einer Einrichtung zur Überwachung des Zustands des Radsatzes gemäß einer bevorzugten Ausführungsform der Erfindung.

### Beschreibung des Ausführungsbeispiels

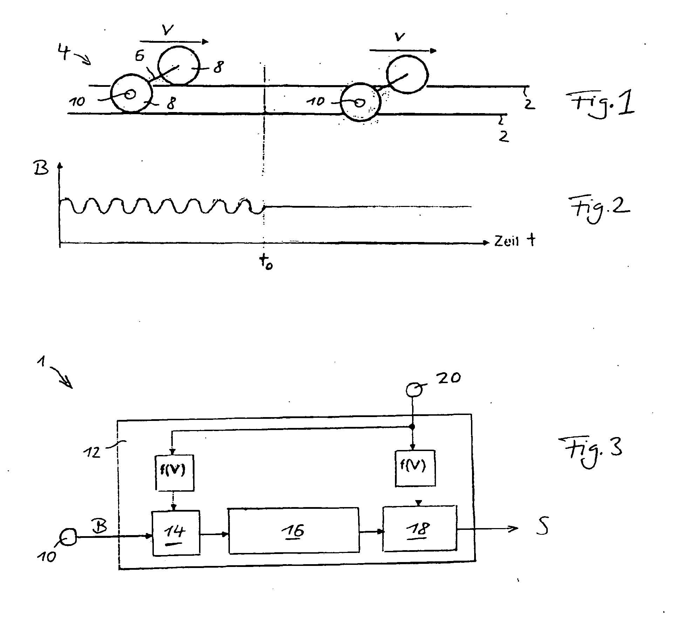

In der Fig.1 ist eine perspektivische Darstellung eines Radsatzes eines Drehgestells eines Schienenfahrzeugs eines Schienenfahrzeugverbandes bei ungestörtem Lauf und in entgleistem Zustand gezeigt. Dabei ist im linken Abschnitt von Fig.1 ein in Spur, d.h. auf parallelen Schienen 2 abrollender Radsatz 4 gezeigt, bestehend aus einer Achse 6 mit zwei an ihr starr befestigten Rädern 8. Die Räder 8 des Radsatzes 4 weisen jeweils ein konisches Radprofil auf, d.h. der Raddurchmesser an der Lauffläche verringert sich in bekannter Weise in einer vom Spurkranz weg weisenden Richtung kontinuierlich. Dadurch ergibt sich während des Abrollens des Radsatzes 4 auf den Schienen 2 der eingangs erläuterte Sinuslauf, d.h. periodische Schwingungen relativ zu den Schienen und zum Wagenkasten des Schienenfahrzeugs. An dem Radsatz 4 sei ein Sensor 10 zur Aufnahme der Schwingungen des Radsatzes 4 befestigt, wie sie während des Sinuslaufs auftreten. Die entsprechenden Signale B des Sensors 10 sind in Fig.2 über der Zeitachse dargestellt. Bevorzugt wird ein Beschleunigungssensor verwendet.

Wie anhand des linken Abschnitts von Fig.2 zu sehen ist, sind die die Schwingungen des Radsatzes 4 repräsentierenden Signale periodisch sinusförmig. Die Frequenz der Schwingungen hängt von der momentanen Fahrgeschwindigkeit v des Schienenfahrzeugs bzw. von der Drehgeschwindigkeit der Räder 8 ab. Dabei existiert für jede Geschwindigkeit v abhängig von Faktoren wie der Geometrie und der Aufhängungssteifigkeit des Radsatzes 4 am Wagenkasten eine charakteristische Frequenz bzw. ein charakteristischer Frequenzbereich, welcher beispielsweise durch Versuche ermittelbar ist.

Die Signale B des Beschleunigungssensors 10 werden in eine mikroprozessorbasierte Auswerteeinrichtung 12 gemäß Fig.3 eingesteuert, welche vorzugsweise einen Filter 14, eine Signalaufbereitungseinheit 16 sowie einen Vergleicher 18 aufweist. Über einen Geschwindigkeitssensor 20 erhält die Auswerteeinrichtung 12 außerdem ein Signal für die momentane Fahrzeuggeschwindigkeit v. Die Frequenz der momentanen Schwingungen des Radsatzes 4 wird vorzugsweise durch eine Fast-Fourrier-Transformation (FFT) der Sensorsignale des Beschleunigungssensors 10 innerhalb der Signalaufbereitungseinheit 16 ermittelt.

Im Vergleicher 18 der Auswerteeinrichtung 12 sind weiterhin vorzugsweise Kennfelder abgespeichert, welche die Abhängigkeit der Frequenz des Sinuslaufs von der momentanen Fahrgeschwindigkeit v des Schienenfahrzeugs bzw. von der Drehgeschwindigkeit der Räder 8 bei ungestörtem Lauf, d.h. bei in den Schienen 2 ordnungsgemäß abrollenden Rädern 8 darstellen. Diese Kennfelder mit den charakteristischen Frequenzen werden beispielsweise durch Versuche ermittelt.

Die auf den gemessenen Signalen B beruhende, von der Signalaufbereitungseinheit 16 gelieferte Frequenz der periodischen Schwingungen in Bezug zur jeweils vorliegenden Fahrzeuggeschwindigkeit v oder Raddrehgeschwindigkeit wird sodann mit einem gespeicherten, für die vorliegende Fahrzeuggeschwindigkeit v oder Raddrehgeschwindigkeit typischen Wert oder Wertebereich für die Frequenz des Sinuslaufs verglichen und bei Abweichung der gemessenen Frequenz von dem gespeicherten Wert oder von dem gespeicherten Wertebereich um ein vorbestimmtes Maß ein Signal S für das Vorliegen einer Entgleisung des Radsatzes 4 oder Drehgestells erzeugt.

Es sei angenommen, dass zu einem Zeitpunkt t₀ der Radsatz 4 beispielsweise aufgrund eines auf den Schienen 2 liegenden Gegenstands entgleist (Fig.2). Dann rollen die Räder 8 des Radsatzes 4 nicht mehr in den Schienen 2 sondern daneben im Gleisbett. Da dort der rückstellende Effekt des konischen Randprofils aufgrund der fehlenden Radführung durch die Schienen 2 nicht mehr gegeben ist, bildet sich kein Sinuslauf mehr aus. Vielmehr laufen die Räder 8 annähernd gerade, so dass auch das Signal B des Beschleunigungssensors 10 eine Gerade liefert, wie aus dem rechten Abschnitt von Fig.2 hervorgeht. Dies bedeutet gleichzeitig auch, dass die Frequenz des gemessenen Signals B gleich Null ist.

Im vorliegenden Fall ergibt der Vergleich der gemessen Frequenz Null des Schwingungssignals B ab dem Zeitpunkt t₀ mit dem für die gerade vorliegende Fahrzeuggeschwindigkeit v zu erwartende Frequenz eine Abweichung, welche größer als ein vorgegebenes Maß ist, so dass die Vergleichseinheit 18 der Auswerteeinrichtung 12 ein Signal S für das Vorliegen einer Entgleisung des Radsatzes 4 aussteuert.

Dieses Signal S kann dem Triebwagenführer des Schienenfahrzeugverbands optisch und/oder akustisch dargestellt werden, beispielsweise in Form einer blinkenden Warnlampe oder durch einen Wamton, damit dieser Gegenmaßnahmen einleitet, beispielsweise in Form einer Notbremsung. Anstatt dessen oder parallel hierzu kann die Auswerteeinrichtung 12 bei Vorliegen des Entgleisungssignals die Bremsanlage des Schienenfahrzeugverbandes auch automatisch ansteuern, um den Schienenfahrzeugverband einzubremsen.

### Bezugszeichenliste

- 1: Einrichtung
- 2: Schienen
- 4: Radsatz
- 6: Achse
- 8: Räder
- 10: Beschleunigungssensor
- 12: Auswerteeinrichtung
- 14: Filter
- 16: Signalaufbereitungseinheit
- 18: Vergleicher
- 20: Geschwindigkeitssensor

## Patentansprüche

1. Verfahren zur Zustandsüberwachung von Radsätzen (4) oder Drehgestellen eines Schienenfahrzeugs, wobei die Räder (8) der Radsätze (4) oder Drehgestelle durch Achsen (6) starr verbunden sind und ein konisches Radprofil aufweisen, **dadurch gekennzeichnet, dass** ein Sinuslauf wenigstens eines Radsatzes (4) oder Drehgestells, welcher auf dem konischen Radprofil der Räder (8) basiert, überwacht und bei einem Ausbleiben des Sinuslaufs ein Signal (S) für das Vorliegen einer Entgleisung des Radsatzes (4) oder Drehgestells erzeugt wird.

2. Verfahren nach Anspruch 1, **dadurch gekennzeichnet, dass** die Frequenz des Sinuslaufs in Bezug zur jeweils vorliegenden Fahrzeuggeschwindigkeit (v) oder Raddrehgeschwindigkeit gemessen und mit einem gespeicherten, für die vorliegende Fahrzeuggeschwindigkeit (v) oder Raddrehgeschwindigkeit typischen Wert oder Wertebereich für diese Frequenz verglichen und bei Abweichung der gemessenen Frequenz von dem gespeicherten Wert oder Wertebereich um ein vorbestimmtes Maß das Signal (S) für das Vorliegen einer Entgleisung des Radsatzes (4) oder Drehgestells erzeugt wird.

3. Verfahren nach Anspruch 1 oder 2, **dadurch gekennzeichnet, dass**
das Signal (S) für das Vorliegen einer Entgleisung des Radsatzes (4) oder Drehgestells optisch und/oder akustisch dargestellt wird.

4. Einrichtung zur Überwachung des Zustands von Radsätzen (4) oder Drehgestellen von Schienenfahrzeugen, wobei die Räder (8) der Radsätze (4) oder Drehgestelle ein konisches Radprofil aufweisen, **dadurch gekennzeichnet, dass** sie Sensormittel (10) zur Überwachung des Sinuslaufs wenigstens eines Radsatzes (4) oder Drehgestells aufweist, welche auf dem konischen Radprofil der Räder (8) basieren, sowie eine Auswerteeinrichtung (12) zur Auswertung der Sensorsignale (B) der Sensormittel (10), welche bei einem Ausbleiben des Sinuslaufs ein Signal (S) für das Vorliegen einer Entgleisung des Radsatzes (4) oder Drehgestells erzeugt.

5. Einrichtung nach Anspruch 4, **dadurch gekennzeichnet, dass** die Sensormittel (10) wenigstens einen am Radsatz (4) oder Drehgestell angeordneten Beschleunigungssensor (10) aufweisen.

## Claims

1. Method for monitoring the condition of wheelsets (4) or bogies of a railway vehicle, wherein the wheels (8) of the wheelsets (4) or bogies are rigidly connected by axles (6) and have a conical wheel profile, **characterised in that** a sinusoidal run of at least one wheelset (4) or bogie which is based on the conical wheel profile of the wheels (8) is monitored and, in the absence of a sinusoidal run, a signal (S) for the presence of a derailment of the wheelset (4) or bogie is generated.

2. Method according to claim 1, **characterised in that** the frequency of the sinusoidal run is measured relative to the respective vehicle speed (v) or wheel rotation speed and is compared with a stored value or value range for this frequency which is typical for the present vehicle speed (v) or wheel rotation speed, and in case of a deviation of the measured frequency from the stored value or value range by a predetermined amount, the signal (S) for the presence of a derailment of the wheelset (4) or bogie is generated.

3. Method according to claim 1 or 2, **characterised in that** the signal (S) for the presence of a derailment of the wheelset (4) or bogie is indicated optically and / or acoustically.

4. Unit for monitoring the condition of wheelsets (4) or bogies of railway vehicles, wherein the wheels (8) of the wheelsets (4) or bogies have a conical wheel profile,
**characterised in that** it comprises sensor means (10) for monitoring the sinusoidal run of at least one wheelset (4) or bogie which are based on the conical wheel profile of the wheels (8), and an evaluating device (12) for evaluating the sensor signals (B) of the sensor means (10) which generates, in the absence of a sinusoidal run, a signal (S) for the presence of a derailment of the wheelset (4) or bogie.

5. Unit according to claim 4, **characterised in that** the sensor means (10) comprise at least one acceleration sensor (10) disposed on the wheelset (4) or bogie.

## Revendications

1. Procédé de contrôle de l'état d'essieux (4) ou de bogies d'un véhicule ferroviaire, dans lequel les roues (8) des essieux (4) ou des bogies sont reliées rigidement par des axes (6) et ont un profil de roue conique, **caractérisé en ce que** l'on contrôle une course sinusoïdale d'au moins un essieu (4) ou d'un bogie, qui repose sur le profil conique des roues (8), et, en l'absence d'une course sinusoïdale, on produit un signal (S) de présence d'un déraillement de l'essieu (4) ou du bogie.

2. Procédé suivant la revendication 1, **caractérisé en ce que** l'on mesure la fréquence de la course sinusoïdale en relation à la vitesse (v) présente respective du véhicule ou à la vitesse de l'essieu et on la compare à une valeur mémorisée typique de la vitesse (v) présente du véhicule ou de la vitesse de l'essieu ou à une plage de valeurs de cette fréquence et, s'il y écart entre la fréquence mesurée et la valeur mémorisée ou la plage de valeurs mémorisées d'un montant déterminé à l'avance, on produit le signal (S) de la présence d'un déraillement de l'essieu (4) ou du bogie.

3. Procédé suivant la revendication 1 ou 2, **caractérisé en ce que** l'on représente visuellement et/ou acoustiquement le signal (S) de présence d'un déraillement de l'essieu (4) ou du bogie.

4. Dispositif de contrôle de l'état d'essieux ou de bogies de véhicules ferroviaires, dans lequel les roues (8) des essieux (4) ou des bogies ont un profil de roue conique, **caractérisé en ce qu'**il a des moyens (10) formant capteur de contrôle de la course sinusoïdale d'au moins un essieu (4) ou un bogie, qui repose sur le profil conique des roues (8), ainsi qu'un dispositif (12) d'exploitation, pour l'exploitation des signaux (B) des moyens (10) formant capteur, qui produit, s'il n'y a pas de course sinusoïdale, un signal (S) de présence d'un déraillement de l'essieu (4) ou du bogie.

5. Dispositif suivant la revendication 4, **caractérisé en ce que** les moyens (10) formant capteur comprennent au moins un capteur (10) d'accélération, monté sur l'essieu (4) ou sur le boggie.
